# EUROPÄISCHE PATENTSCHRIFT

(11) **EP 1 848 280 B1**
(45) Veröffentlichungstag und Bekanntmachung des Hinweises auf die Patenterteilung: **29.07.2009**
(21) Anmeldenummer: 05754756.4
(22) Anmeldetag: 27.05.2005
(51) Int. Cl.: A22B 5/08

(54) **MIKROBENBESTÄNDIGER ENTHAARUNGSSCHLÄGER**
MICROBE-RESISTANT HAIR REMOVING SCRAPER
RACLEUR D'EPILAGE RESISTANT AUX MICROBES

(30) Priorität: 04.02.2005 DE 102005004979
(43) Veröffentlichungstag der Anmeldung: 31.10.2007
(73) Patentinhaber: ContiTech Vibration Control GmbH, 30165 Hannover (DE)
(72) Erfinder: MEIER, Ernst-August, 31162 Salzdetfurth (DE); KARGE, Detlef, 21382 Brietlingen (DE)
(74) Vertreter: Finger, Karsten
(86) Internationale Anmeldenummer: PCT/DE2005/000956
(87) Internationale Veröffentlichungsnummer: WO 2006/081782

(56) Entgegenhaltungen:
- DE-A1- 3 138 891
- US-A- 2 940 118
- US-A- 4 907 317
- US-A1- 2004 063 806

## Beschreibung

Die Erfindung betrifft einen Enthaarungsschläger, umfassend einen Grundkörper aus polymerem Werkstoff sowie metallische Zusatzbauteile als Teil einer Schlachtlinie, insbesondere für das Schlachten von Schweinen, wobei der polymere Werkstoff eine vulkanisierte Kautschukmischung ist, umfassend eine Kautschukkomponente sowie Mischungsingredienzien.

Ein gattungsgemäßer Enthaarungsschläger wird beispielsweise in folgenden Druckschriften näher beschrieben: US 15 318, US 2 604 656, US 4 907 317 und EP 0 665 717 B1.

Der elastische Grundkörper des Enthaarungsschlägers weist zumeist einen eingebetteten Festigkeitsträger in Form von Gewebe oder Fasern auf. Er kann dabei mit oder ohne Entlastungsnuten ausgestattet sein. Eine besonders bewährte Konstruktion wird in der Patentschrift EP 0 665 717 B1 vorgestellt, wonach der Grundkörper des Enthaarungsschlägers mit einem Prallhocker und Entlastungsnuten versehen ist. Die metallischen Zusatzbauteile sind Kratzer, Befestigungselemente und ein Anschlag.

Problem punkt ist die Vermehrung von Mikroorganismen (Bakterien, Mikroben) beim Enthaarungsprozess, zumal das heiße Wasser mehrfach im Umlauf verwendet wird. Das maximale Zulassungslimit an Mikroorganismen wird häufig überschritten. Auch wenn in einem Schlachtbetrieb alle hygienischen und gesundheitsrelevanten Maßnahmen ergriffen werden, führt die Anhäufung von Mikroorganismen zu einer Zerstörung des polymeren Werkstoffes und somit zu einem Ausfall des Enthaarungsschlägers.

In der Offenlegungsschrift US 2004/0063806 A1 wird ein Inhibitor, beispielsweise Triclosan, vorgestellt, der im technochemischen Bereich, in der Kosmetik-, Pharma- und Lebensmittelindustrie eingesetzt wird. Der diesbezügliche Einsatz beim Schlachtbetrieb wird in diesem Dokument nicht beschrieben.

Im Hintergrund der oben genannten Problematik beim Schlachtbetrieb zeichnet sich der neue Enthaarungsschläger dadurch aus, dass
- die Kautschukmischung weichmacherfrei ist, wobei in Bezug auf die Gesamtmasse der Kautschukmischung der Anteil der Kautschukkomponente 10 bis 70 Gew.-% beträgt, und dass
- der Kautschukmischung ein aktiver Inhibitor beigemischt ist, der die Vermehrung von Mikroarganismen verhindert, wobei der Inhibitor in der Kautschukmischung gleichmäßig verteilt ist, wobei ferner in Bezug auf die Gesamtmasse der Kautschukmischung der Anteil des Inhibitors 0.1 bis 10 Gew.-% beträgt.

Der Inhibitor ist insbesondere schwerlöslich in Wasser. Auf diese Weise wird verhindert, dass der Inhibitor heraus gewaschen wird.

Besonders wirksame Inhibitoren, auch unter dem Aspekt der oben genannten Schwerlöslichkeit, sind:
- 2,4,4'-trichlor-2'-hydroxy-diphenyl-ether (Triclosan);
- N'-tert.butyl-N-cyclopropyl-6-(methylthio)-1,3,5-triazin-2,4-diamin.

Im Rahmen einer vorteilhaften Variante ist dem polymeren Werkstoff ein Träger beigemischt, der mit dem Inhibitor beladen ist, und zwar unter Bildung eines Träger/Inhibitor-Adduktes. Das Trägermaterial ist insbesondere ein Molekularsieb in Form eines Metall-Aluminium-Silikates der folgenden Formel:
Meₙ [(AlO₂)ₓ· (SiO₂)_{y}] mit oder ohne Kristallwasser, insbesondere
Na₈₆ [(AlO₂)₈₆·(SiO₂)₁₀₆] mit oder ohne Kristallwasser
Ein häufig verwendetes Metall-Aluminium-Silikat ist:

   Na₈₈ [(AlO₂)₈₈·(SiO₂)₁₀₆]·276 H₂O

Dabei wird das Kristallwasser entweder vollständig oder partiell dehydratisiert. Die frei gewordenen Kristallwasserplätze innerhalb des Metall-Aluminium-Silikat-Gitters werden dann durch Beladung mit dem Inhibitor belegt. Wirksam ist dann das entsprechende Addukt.

Alternativ hierzu kann der Träger auch aus Fasern, beispielsweise Polyamid-, Polyester- oder Cellulosefasern, bestehen, die mit dem Inhibitor beladen sind, und zwar unter Bildung eines Faser/Inhibitor-Adduktes.

Der Träger des jeweiligen Adduktes hat neben seiner Beladungsfunktion zusätzlich noch Verstärkungseigenschaften, so dass auf die klassische Verstärkung in Form eines Gewebes verzichtet werden kann. Das Addukt bindet einerseits den Inhibitor (Depotwirkung), andererseits sorgt es für einen kontrollierten biochemischen Wirkmechanismus mit Langzeitwirkung.

Der Inhibitor bzw. das Addukt ist im polymeren Werkstoff gleichmäßig verteilt. Sein Anteil in Bezug auf die Gesamtmasse des polymeren Werkstoffes beträgt insbesondere 0,5 bis 5 Gew.-%.

Die Kantschukmischung ist weichmacherfrei, wobei in Verbindung mit der vulkanisierten Kautschukmischung folgende Kautschukkomponenten zum Einsatz gelangen:
- Die Kautschukkomponente ist ein Ethylen-Propylen-Dien-Mischpolymerisat (EPDM) oder Nitrilkautschuk (NBR), insbesondere ein EPDM/NBR-Verschnitt.
- Die Kautschukkomponente ist Silikonkautschuk, Butylkautschuk (IIR), Chlorbutylkautschuk (CIIR) oder Brombutylkautschuk (BIIR), die jeweils unverschnitten sind.

In Bezug auf die Gesamtmasse der Kautschukmischung beträgt der Anteil der Kautschuk- bzw. Verschnittkomponente insbesondere 30 bis 70 Gew.-%. Die optimale Werkstoffkonstellation ist bei einem Anteil von 40 bis 55 Gew.-% gegeben.

Die Kautschukmischung weist üblicherweise einen Füllstoff bzw. ein Füllstoffsystem auf der Basis von Ruß und/oder Kieselsäuren und/oder Silikaten und/oder Kreide auf. Insbesondere gelangt ein Füllstoffsystem auf der Basis von Ruß, Magnesiumsilikat und Kreide zum Einsatz.

Weitere übliche Mischungsingredienzien sind ein Vernetzer (z.B. Schwefel oder Schwefelspender) und/oder Vulkanisationsaktivator (z.B. Zinkoxid) bzw. Vernetzersystem, Verarbeitungshilfsmittel (z.B. Stearinsäure) sowie gegebenenfalls Alterungsschutzmittel und Stabilisatoren. Diesbezüglich wird auf den allgemeinen Stand der Kautschukmischungstechnologie verwiesen. Als Vernetzersystem, umfassend einen Vernetzer und/oder Vulkanisationsaktivator sowie Beschleuniger, wird insbesondere Zinkoxid (Vulkanisationsaktivator) und Zink-N-dibenzyldithiocarbamat (Beschleuniger ZBEC) verwendet.

Neben den oben genannten üblichen Mischungsingredienzien kommen hier als weitere Mischungsbestandteile die bereits näher vorgestellten Addukte in Frage.

Die Erfindung wird nun anhand eines Ausführungsbeispiels unter Bezugnahme auf eine schematische Zeichnung näher erläutert.

Der Enthaarungsschläger **1** umfasst einen Grundkörper **2** aus polymerem Werkstoff, der im Wesentlichen rechteckig ist. Der Grundkörper ist innerhalb seiner Rückseite mit einem Prallhocker **3** versehen, der einstückig mit dem Grundkörper ausgebildet ist. An seiner Vorderseite ist der Enthaarungsschläger mit winkelförmigen Kratzern **4** und **5** aus Metall ausgestattet, wobei deren Verankerung jeweils mittels einer Bohrung und einer Nietverbindung **6** und **7** erfolgt. Der Grundkörper ist ferner in dem Anschraubbereich **8** mittels einer Bohrung und eines Schrauben-Bolzen-Systems **9** sowie einer Klemmplatte **10** fest verankert. Ferner ist der Enthaarungsschläger mit einem Anschlag **11** versehen. Weitere konstruktive Details, insbesondere in Verbindung mit Entlastungsnuten, sind in der Patentschrift EP 0 665 717 B1 erwähnt.

In den Grundkörper **2** aus polymerem Werkstoff auf der Basis einer vulkanisierten Kautschukmischung (Elastomer) ist ein aktiver Inhibitor eingemischt, der die Vermehrung von Mikroorganismen verhindert. Diesbezüglich werden nun folgende zwei Varianten vorgestellt:
- Der Grundkörper **2** des Enthaarungsschlägers **1** weist einen mittigen Festigkeitsträger in Form eines durchgehenden Gewebes auf, und zwar unter Ausbildung einer Ober- und Unterschicht des Grundkörpers, sowie es bei gewebeverstärkten Fördergurten oder Schläuchen der Fall ist. In die Ober- und Unterschicht ist ohne weiteren Träger der Inhibitor eingemischt, und zwar bei im Wesentlichen gleichmäßiger Verteilung innerhalb jeder Schicht.
- Der Grundkörper **2** ist nicht gewebeverstärkt. Stattdessen ist dieser mit einem Träger/Inhibitor-Addukt versehen, wobei insbesondere das Molekularsieb/Inhibitor-Addukt oder das Faser/Inhibitor-Addukt zur Anwendung gelangen. Das Addukt ist auch hier im Wesentlichen gleichmäßig verteilt. Der Träger übernimmt hier zugleich die Festigkeitsträgerfunktion.

### Bezugszeichenliste

- 1: Enthaarungsschläger
- 2: Grundkörper
- 3: Prallhocker
- 4: Kratzer
- 5: Kratzer
- 6: Nietverbindung
- 7: Nietverbindung
- 8: Anschraubbereich
- 9: Schrauben-Bolzen-System
- 10: Klemmplatte
- 11: Anschlag

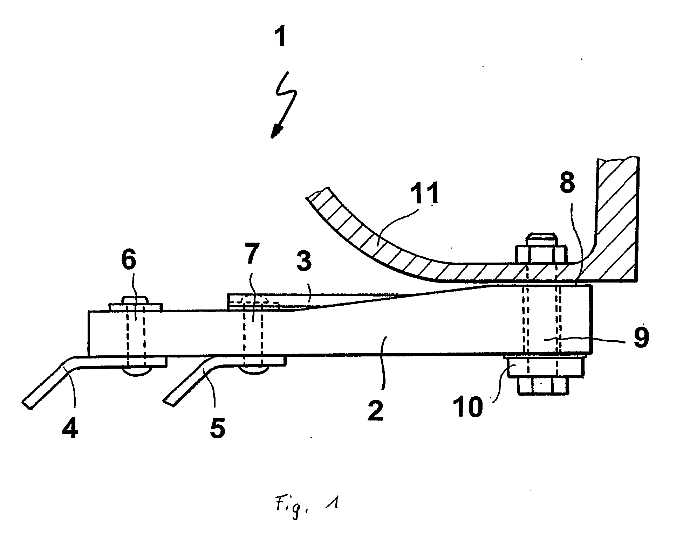

## Patentansprüche

1. Enthaarungsschläger (1), umfassend einen Grundkörper (2) aus polymerem Werkstoff sowie metallische Zusatzbauteile (4, 5, 6, 7, 9, 10, 11) als Teil einer Schlachtlinie, insbesondere für das Schlachten von Schweinen, wobei der polymere Werkstoff eine vulkanisierte Kautschukmischung ist, umfassend eine Kautschukkomponente sowie Mischungsingredienzien, **dadurch gekennzeichnet, dass**
- die Kautschukmischung weichmacherfrei ist, wobei in Bezug auf die Gesamtmasse der Kautschukmischung der Anteil der Kautschukkomponente 10 bis 70 Gew.-% beträgt, und dass
- der Kautschukmischung ein aktiver Inhibitor beigemischt ist, der die Vermehrung von Mikroorganismen verhindert, wobei der Inhibitor in der Kautschukmischung gleichmäßig verteilt ist, wobei ferner in Bezug auf die Gesamtmasse der Kautschukmischung der Anteil des Inhibitors 0,1 bis 10 Gew.-% beträgt.

2. Enthaarungsschläger nach Anspruch 1, **dadurch gekennzeichnet, dass** der Inhibitor schwerlöslich in Wasser ist.

3. Enthaarungsschläger nach Anspruch 1 oder 2, **dadurch gekennzeichnet, dass** dem polymeren Werkstoff ein Träger beigemischt ist, der mit dem Inhibitor beladen ist, und zwar unter Bildung eines Träger/Inhibitor-Adduktes.

4. Enthaarungsschläger nach Anspruch 3, **dadurch gekennzeichnet, dass** der Träger ein Molekularsieb ist, insbesondere auf der Basis eines Natrium-Aluminium-Silikates, und zwar unter Bildung eines Molekularsieb/Inhibitor-Adduktes.

5. Enthaarungsschläger nach Anspruch 3, **dadurch gekennzeichnet, dass** der Träger aus Fasern besteht, und zwar unter Bildung eines Faser/Inhibitor-Adduktes.

6. Enthaarungsschläger nach einem der Ansprüche 1 bis 5, **dadurch gekennzeichnet, dass** der Anteil des Inhibitors 0,5 bis 5 Gew.-% beträgt.

7. Enthaarungsschläger nach einem der Ansprüche 1 bis 6, **dadurch gekennzeichnet, dass** die Kautschukkomponente ein Ethylen-Propylen-Dien-Mischpolymerisat (EPDM) oder Nitrilkautschuk (NBR), insbesondere ein EPDM/NBR-Verschnitt, ist.

8. Enthaarungsschläger nach einem der Ansprüche 1 bis 6, **dadurch gekennzeichnet, dass** die Kautschukkomponente Silikonkautschuk ist.

9. Enthaarungsschläger nach einem der Ansprüche 1 bis 6, **dadurch gekennzeichnet, dass** die Kautschukkomponente Butylkautschuk (IIR) ist.

10. Enthaarungsschläger nach einem der Ansprüche 1 bis 6, **dadurch gekennzeichnet, dass** die Kautschukkomponente ein halogenierter Kautschuk ist.

11. Enthaarungsschläger nach Anspruch 10, **dadurch gekennzeichnet, dass** der halogenierte Kautschuk Chlorbutylkautschuk (CIIR) oder Brombutylkautschuk (BIIR) ist.

12. Enthaarungsschläger nach einem der Ansprüche 8 bis 11, **dadurch gekennzeichnet, dass** die Kautschukkomponente unverschnitten ist.

13. Enthaarungsschläger nach einem der Ansprüche 1 bis 12, **dadurch gekennzeichnet, dass** in Bezug auf die Gesamtmasse der Kautschukmischung der Anteil der. Kautschuk- bzw. Verschnittkomponente 30 bis 70 Gew.-% beträgt.

14. Enthaarungsschläger nach Anspruch 13, **dadurch gekennzeichnet, dass** der Anteil der. Kautschuk- bzw. Verschnittkomponente 40 bis 55 Gew.-% beträgt.

## Claims

1. Hair removal paddle (1) comprising a base body (2) made of polymer material and also metallic additional components (4, 5, 6, 7, 9, 10, 11) as part of a slaughtering line, particularly for slaughtering pigs, wherein the polymer material is a vulcanized rubber mixture comprising a rubber component and also mixture ingredients,
**characterized in that**
- the rubber mixture is plasticizer free, the proportion of the total mass of the rubber mixture which is attributable to the rubber component being in the range from 10 to 70 wt.-%, and **in that**
- the rubber mixture has admixed to it an active inhibitor which prevents the growth of microorganisms, the inhibitor being uniformly distributed in the rubber mixture, the proportion of the total mass of the rubber mixture which is attributable to the inhibitor being in the range from 0.1 to 10 wt.-%.

2. Hair removal paddle according to Claim 1, **characterized in that** the inhibitor is sparingly soluble in water.

3. Hair removal paddle according to Claim 1 or 2, **characterized in that** the polymer material has admixed to it a carrier which is loaded with the inhibitor to form a carrier/inhibitor adduct.

4. Hair removal paddle according to Claim 3, **characterized in that** the carrier is a molecular sieve, particularly a molecular sieve based on a sodium aluminosilicate, to form a molecular sieve/inhibitor adduct.

5. Hair removal paddle according to Claim 3, **characterized in that** the carrier consists of fibres to form a fibre/inhibitor adduct.

6. Hair removal paddle according to any one of Claims 1 to 5, **characterized in that** the proportion of inhibitor is in the range from 0.5 to 5 wt.-%.

7. Hair removal paddle according to any one of Claims 1 to 6, **characterized in that** the rubber component is an ethylene-propylene-diene monomer (EPDM) copolymer or a nitrile rubber (NBR), particularly an EPDM/NBR blend.

8. Hair removal paddle according to any one of Claims 1 to 6, **characterized in that** the rubber component is silicone rubber.

9. Hair removal paddle according to any one of Claims 1 to 6, **characterized in that** the rubber component is butyl rubber (IIR).

10. Hair removal paddle according to any one of Claims 1 to 6, **characterized in that** the rubber component is a halogenated rubber.

11. Hair removal paddle according to Claim 10, **characterized in that** the halogenated rubber is chlorobutyl rubber (CIIR) or bromobutyl rubber (BIIR).

12. Hair removal paddle according to any one of Claims 8 to 11, **characterized in that** the rubber component is uncut.

13. Hair removal paddle according to any one of Claims 1 to 12, **characterized in that** the proportion of the total mass of the rubber mixture which is attributable to the rubber or blend component is in the range from 30 to 70 wt.-%.

14. Hair removal paddle according to Claim 13, **characterized in that** the proportion of the rubber or blend component is in the range from 40 to 55 wt.-%.

## Revendications

1. Racleur d'épilage (1), comportant un corps de base (2) en matériau polymère et des composantes métalliques supplémentaires (4, 5, 6, 7, 9, 10, 11) faisant partie d'une ligne d'abattage, notamment pour l'abattage de porcs, le matériau polymère étant un mélange de caoutchouc vulcanisé comprenant un composant caoutchouté et des ingrédients de mélange, **caractérisé en ce que**
- le mélange de caoutchouc est exempt de plastifiant, la proportion de composant caoutchouté par rapport à la masse totale du mélange de caoutchouc s'élevant à 10 à 70 % en poids et **en ce que**
- l'on mélange avec le mélange de caoutchouc un inhibiteur actif qui empêche la prolifération de microorganismes, l'inhibiteur étant réparti régulièrement dans le mélange de caoutchouc, la proportion d'inhibiteur par rapport à la masse globale du mélange de caoutchouc s'élevant par ailleurs à 0,1 à 10 % en poids.

2. Racleur d'épilage selon la revendication 1, **caractérisé en ce que** l'inhibiteur est peu soluble dans l'eau.

3. Racleur d'épilage selon la revendication 1 ou 2, **caractérisé en ce qu'**on mélange avec le matériau polymère un support qui est chargé avec l'inhibiteur, et ce en formant un adduit support/inhibiteur.

4. Racleur d'épilage selon la revendication 3, **caractérisé en ce que** le support est un crible moléculaire, notamment à base de silicate de sodium-aluminium, et ce en formant un adduit crible moléculaire/inhibiteur.

5. Racleur d'épilage selon la revendication 3, **caractérisé en ce que** le support est composé de fibres, et ce en formant un adduit fibre/inhibiteur.

6. Racleur d'épilage selon l'une quelconque des revendications 1 à 5, **caractérisé en ce que** la proportion d'inhibiteur s'élève à 0,5 à 5 % en poids.

7. Racleur d'épilage selon l'une quelconque des revendications 1 à 6, **caractérisé en ce que** le composant de caoutchouc est un polymérisat mélangé d'éthylène-propylène-diène (EPDM) ou du caoutchouc nitrile (NBR), notamment un coupage EPDM/NBR.

8. Racleur d'épilage selon l'une quelconque des revendications 1 à 6, **caractérisé en ce que** le composant de caoutchouc est du caoutchouc au silicone.

9. Racleur d'épilage selon l'une quelconque des revendications 1 à 6, **caractérisé en ce que** le composant de caoutchouc est du caoutchouc au butyle (IIR).

10. Racleur d'épilage selon l'une quelconque des revendications 1 à 6, **caractérisé en ce que** le composant de caoutchouc est un caoutchouc halogéné.

11. Racleur d'épilage selon la revendication 10, **caractérisé en ce que** le caoutchouc halogéné est du caoutchouc de chlorebutyle (CIIR) ou du caoutchouc de bromebutyle (BIIR).

12. Racleur d'épilage selon l'une quelconque des revendications 8 à 11, **caractérisé en ce que** le composant de caoutchouc n'est pas coupé.

13. Racleur d'épilage selon l'une quelconque des revendications 1 à 12, **caractérisé en ce que**, par rapport à la masse totale de mélange de caoutchouc, la proportion de composant caoutchouté ou coupé s'élève à 30 à 70 % en poids.

14. Racleur d'épilage selon la revendication 13, **caractérisé en ce que** la proportion de composant caoutchouté ou coupé s'élève à 40 à 55 % en poids.
